(19) Europäisches Patentamt / European Patent Office / Office européen des brevets

(11) **EP 4 396 629 B1**

(12) **FASCICULE DE BREVET EUROPEEN**

(45) Date de publication et mention
de la délivrance du brevet:
**07.05.2025   Bulletin 2025/19**

(21) Numéro de dépôt: **22754483.0**

(22) Date de dépôt: **18.07.2022**

(51) Classification Internationale des Brevets (IPC):
**G02F 1/015** *(2006.01)*        **G02F 1/025** *(2006.01)*
**G02F 1/21** *(2006.01)*

(52) Classification Coopérative des Brevets (CPC):
**G02F 1/212; G02F 1/015; G02F 1/025;**
G02F 2203/20; G02F 2203/70

(86) Numéro de dépôt international:
**PCT/FR2022/051427**

(87) Numéro de publication internationale:
**WO 2023/031530 (09.03.2023 Gazette 2023/10)**

(54) **PUCE PHOTONIQUE POURVUE DE DEUX MODULATEURS MACH ZEHNDER**

PHOTONISCHER CHIP MIT EINEM ODER ZWEI MACH-ZEHNDER-MODULATOREN

PHOTONIC CHIP PROVIDED WITH ONE OR TWO MACH-ZEHNDER MODULATORS

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **31.08.2021   FR 2109029**

(43) Date de publication de la demande:
**10.07.2024   Bulletin 2024/28**

(73) Titulaire: **Scintil Photonics**
**38040 Grenoble Cedex 9 (FR)**

(72) Inventeur: **MENEZO, Sylvie**
**38040 GRENOBLE CEDEX 9 (FR)**

(74) Mandataire: **IP Trust**
**2, rue de Clichy**
**75009 Paris (FR)**

(56) Documents cités:
**EP-A1- 0 795 778      US-A1- 2016 357 086**
**US-B1- 9 344 196**

• **BONK R ET AL: "Linear semiconductor optical
amplifiers for amplification of advanced
modulation formats", INSPEC, THE INSTITUTION
OF ELECTRICAL ENGINEERS, STEVENAGE, GB,
23 April 2012 (2012-04-23), XP002807722**

• **HIRAKI TATSUROU ET AL: "Membrane InGaAsP
Mach-Zehnder Modulator Integrated With Optical
Amplifier on Si Platform", JOURNAL OF
LIGHTWAVE TECHNOLOGY, IEEE, USA, vol. 38,
no. 11, 2 March 2020 (2020-03-02), pages 3030 -
3036, XP011790451, ISSN: 0733-8724, [retrieved
on 20200527], DOI: 10.1109/JLT.2020.2977426**
• **G. T. REED ET AL: "Silicon optical modulators",
NATURE PHOTONICS, vol. 4, no. 8, 1 August
2010 (2010-08-01), London, pages 518 - 526,
XP055334361, ISSN: 1749-4885, DOI: 10.1038/
nphoton.2010.179**
• **BONK R ET AL: "Linear semiconductor optical
amplifiers for amplification of advanced
modulation formats", OPTICS EXPRESS
OPTICAL SOCIETY OF AMERICA USA, vol. 20,
no. 9, 23 April 2012 (2012-04-23), pages 9657 -
9672, XP002806171, ISSN: 1094-4087, DOI:
10.1364/OE.20.009657**
• **DATABASE INSPEC [online] THE INSTITUTION
OF ELECTRICAL ENGINEERS, STEVENAGE, GB;
23 April 2012 (2012-04-23), BONK R ET AL:
"Linear semiconductor optical amplifiers for
amplification of advanced modulation formats",
XP002807722, Database accession no. 12734845**
• **OPTICS EXPRESS OPTICAL SOCIETY OF
AMERICA USA, vol. 20, no. 9, 23 April 2012
(2012-04-23), pages 9657 - 9672, ISSN:
1094-4087, DOI: 10.1364/OE.20.009657**

**Description**

**DOMAINE DE L'INVENTION**

La présente invention se rapporte au domaine de la photonique et plus particulièrement des puces photoniques intégrées.

Notamment, l'invention concerne une puce photonique pourvue d'un modulateur Mach Zehnder et pour lequel les pertes d'insertion sont compensées par deux amplificateurs optiques à matériaux semi-conducteurs.

Selon la présente invention, les amplificateurs optiques à matériaux semi-conducteurs sont agencés de manière limiter les effets négatifs relatifs à l'amplification d'un signal optique modulé en intensité.

**ARRIERE PLAN TECHNOLOGIQUE DE L'INVENTION**

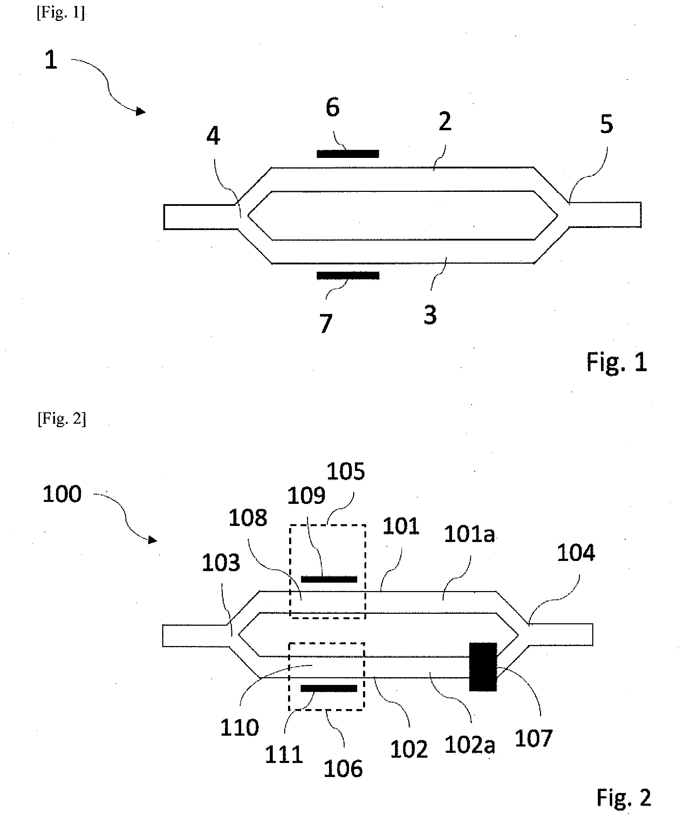

La figure 1 représente un dispositif Mach Zehnder 1 connu de l'état de la technique. Le dispositif Mach Zehnder 1 comprend notamment deux branches de modulation, dites première branche 2 et deuxième branche 3, reliées par l'une de leur extrémité par une entrée optique 4 et par l'autre de leur extrémité par une sortie optique 5.

Notamment, les deux branches de modulation 2 et 3 sont agencées de sorte qu'un rayonnement lumineux injecté au niveau de l'entrée optique 4 soit divisé en un premier rayonnement et un deuxième rayonnement guidés, respectivement, par la première branche 2 et la deuxième branche 3, et de sorte que ledit premier rayonnement et ledit deuxième rayonnement soient recombinés au niveau de la sortie optique.

Le dispositif est également pourvu de deux modulateurs de phase, dit premier modulateur 6 et deuxième modulateur 7 destinés à imposer un déphasage, respectivement, au premier rayonnement et au deuxième rayonnement avant leur recombinaison au niveau de la sortie optique 5. La modification de la phase de l'un et/ou l'autre du premier et du deuxième rayonnement permet notamment de moduler l'intensité du rayonnement recombiné en sortie du dispositif Mach Zehnder.

Néanmoins, un tel dispositif Mach Zehnder 1 est sujet à des pertes, et plus particulièrement à des pertes liées aux pertes des modulateurs de phase 6 et 7, qui en réduisent les performances.

Aussi, afin de pallier ce problème, il est considéré d'adjoindre au dispositif Mach Zehnder un amplificateur optique à matériaux semi-conducteurs (« Semiconductor Optical Amplificator » ou « SOA » selon la terminologie Anglo-Saxonne) afin d'amplifier le rayonnement recombiné. A cet égard, le document [1] cité à la fin de la description ainsi que le document US9344196 divulguent un dispositif Mach Zehnder pourvu d'un amplificateur optique à matériaux semi-conducteurs disposé en aval de la sortie optique dudit dispositif.

Toutefois, cet agencement n'est pas satisfaisant. En effet, et tel qu'indiqué dans le document [2] cité à la fin de la description, le gain optique G d'un amplificateur optique à matériaux semi-conducteurs n'est pas linéaire. Plus particulièrement, le gain optique G diminue lorsque la puissance optique injectée en entrée dudit amplificateur croit de sorte que la puissance délivrée en sortie de l'amplificateur optique à matériaux semi-conducteur ne peut excéder une puissance de saturation. Ce comportement non linéaire donne ainsi lieu à des distorsions du signal modulé en intensité amplifié par le SOA. Par ailleurs, par effet de couplage 'amplitude/ phase' connu et quantifié par l'homme du métier par le 'facteur de Henry' dans les composants à semi-conducteurs III-V SOAs ou lasers, les fortes variations d'intensité optique donnent lieu à des variations de phase, et par voie de conséquence, altèrent également un signal modulé en intensité et en phase, en distordant également la modulation de phase.

Ainsi, un but de la présente invention est de proposer une puce photonique pourvue d'au moins un modulateur Mach Zehnder dont le signal optique peut être amplifié sans pour autant imposer une distorsion du signal modulé.

**BREVE DESCRIPTION DE L'INVENTION**

Le but de l'invention est atteint par une puce photonique comprenant :

- un substrat support pourvu d'une face avant ;
- une couche guide d'onde reposant sur la face avant ;
- un ou deux modulateurs Mach Zehnder formés sur et/ou dans la couche guide d'onde, comprenant chacun deux branches de modulation, dites première branche et deuxième branche, les branches de modulation étant disposées entre une entrée optique et une sortie optique, de sorte qu'un rayonnement lumineux injecté au niveau de l'entrée optique soit divisé en un premier rayonnement et un deuxième rayonnement destinés à être guidés par le ou les modulateurs Mach Zehnder, et soient ensuite recombinés au niveau de la sortie optique, chaque branche de modulation étant configurée pour moduler la phase d'un rayonnement lumineux que ladite branche de modulation est susceptible de guider ;

la puce photonique étant remarquable en ce qu'elle comprend au moins deux amplificateurs optiques à matériaux semi-conducteurs agencés pour amplifier séparément le premier rayonnement et le deuxième rayonnement avant leur recombinaison au niveau de la sortie optique.

Selon un mode de réalisation, chacune des deux branches de modulation comprend une section de modulation formée par un guide d'onde, dit guide d'onde de modulation, et un élément de modulation, avantageusement l'élément de modulation comprend au moins une électrode, l'élément de modulation étant configuré pour moduler la phase d'un rayonnement susceptible d'être guidé par le guide d'onde de modulation, la deuxième branche comprenant également un module de déphasage configuré pour imposer un déphasage fixe à un rayonnement lumineux susceptible d'être guidé par ladite deuxième branche.

Selon un mode de réalisation, le ou les modulateurs Mach Zehnder comprend un unique modulateur Mach Zehnder, la première branche et la deuxième branche de l'unique modulateur Mach Zehnder étant reliées, par l'une de leurs extrémités, par l'entrée optique et, par l'autre de leurs extrémités, par la sortie optique de sorte que le premier rayonnement et le deuxième rayonnement soient guidés, respectivement, par la première branche et par la deuxième branche.

Selon un mode de réalisation, les au moins deux amplificateurs optiques à matériaux semi-conducteurs comprennent un premier amplificateur et un deuxième amplificateur disposés respectivement sur la première branche et sur la deuxième branche, le premier amplificateur et le deuxième amplificateur étant configurés pour amplifier, respectivement, le premier rayonnement et le deuxième rayonnement.

Selon un mode de réalisation, l'amplificateur à matériaux semi-conducteurs d'une branche de modulation est disposé en aval de la section de modulation de la branche de modulation considérée.

Selon un mode de réalisation, l'amplificateur à matériaux semi-conducteurs d'une branche de modulation est disposé en amont de la section de modulation de la branche de modulation considérée.

Selon un mode de réalisation, le ou les modulateur Mach Zehnder comprend deux modulateurs Mach Zehnder dits, respectivement, modulateur I et modulateur Q de sorte que la puce photonique forme un modulateur IQ, la première branche et la deuxième branche du modulateur I étant reliées, par une de leurs extrémités, par une entrée optique intermédiaire dite entrée I, et, par l'autre de leurs extrémités, par une sortie optique intermédiaire dite sortie I, la première branche et la deuxième branche du modulateur Q étant reliées, par une de leurs extrémités, par une autre entrée optique intermédiaire dite entrée Q, et, par l'autre de leurs extrémités, par une autre sortie optique intermédiaire dite sortie Q.

Selon un mode de réalisation, ladite puce photonique comprend un diviseur de rayonnement et un combineur de rayonnement, le diviseur de rayonnement comprenant deux guides d'onde dits, respectivement, guide d'entrée I et guide d'entrée Q, le guide d'entrée I et le guide d'entrée Q reliant l'entrée optique avec, respectivement, l'entrée I et l'entrée Q, de sorte que le premier rayonnement et le deuxième rayonnement soient injectés au niveau de, respectivement, l'entrée I et l'entrée Q, le combineur de rayonnement comprenant deux guides d'onde dits, respectivement, guide de sortie I et guide de sortie Q, le guide de sortie I et le guide de sortie Q reliant la sortie optique avec, respectivement, la sortie I et la sortie Q.

Selon un mode de réalisation, les au moins deux amplificateurs optiques à matériaux semi-conducteurs comprennent un premier amplificateur I, un deuxième amplificateur I, un premier amplificateur Q et un deuxième amplificateur Q, le premier amplificateur I, le deuxième amplificateur I sont disposés respectivement sur la première branche et sur la deuxième branche du modulateur I, tandis que le premier amplificateur Q et le deuxième amplificateur Q sont disposés respectivement sur la première branche et sur la deuxième branche du modulateur Q.

Selon un mode de réalisation, l'amplificateur optique à matériaux semi-conducteurs d'une branche de modulation d'un modulateur Mach Zehnder est disposé entre la section de modulation de la branche de modulation considérée et la sortie optique intermédiaire dudit modulateur Mach Zehnder.

Selon un mode de réalisation, l'amplificateur optique à matériaux semi-conducteurs d'une branche de modulation d'un modulateur Mach Zehnder est disposé entre la section de modulation de la branche de modulation considérée et l'entrée optique intermédiaire dudit modulateur Mach Zehnder.

Selon un mode de réalisation, les au moins deux amplificateurs optiques à matériaux semi-conducteurs comprennent un amplificateur I et un amplificateur Q portés, respectivement, par le guide de sortie I et le guide de sortie Q.

Selon un mode de réalisation, ladite puce photonique comprend en outre un autre module de déphasage configuré pour imposer un autre déphasage fixe à un rayonnement lumineux entre la sortie Q et la sortie optique.

Selon un mode de réalisation, le guide d'onde de modulation comprend du silicium, avantageusement du silicium dopé, encore plus avantageusement une jonction PN le long du guide d'onde en Silicium.

Selon un mode de réalisation, les au moins deux amplificateurs optiques à matériaux semi-conducteur comprend un guide d'onde fait de matériaux semi-conducteurs III-V.

## BREVE DESCRIPTION DES DESSINS

D'autres caractéristiques et avantages de l'invention ressortiront de la description détaillée qui va suivre en référence aux figures annexées sur lesquelles :

[Fig.1] La figure 1 est une représentation schématique d'un dispositif Mach Zehnder 1 connu de l'état de la technique ;

[Fig.2] La figure 2 est une représentation schématique d'un dispositif Mach Zehnder susceptible d'être mis en œuvre dans le cadre de la présente invention ;

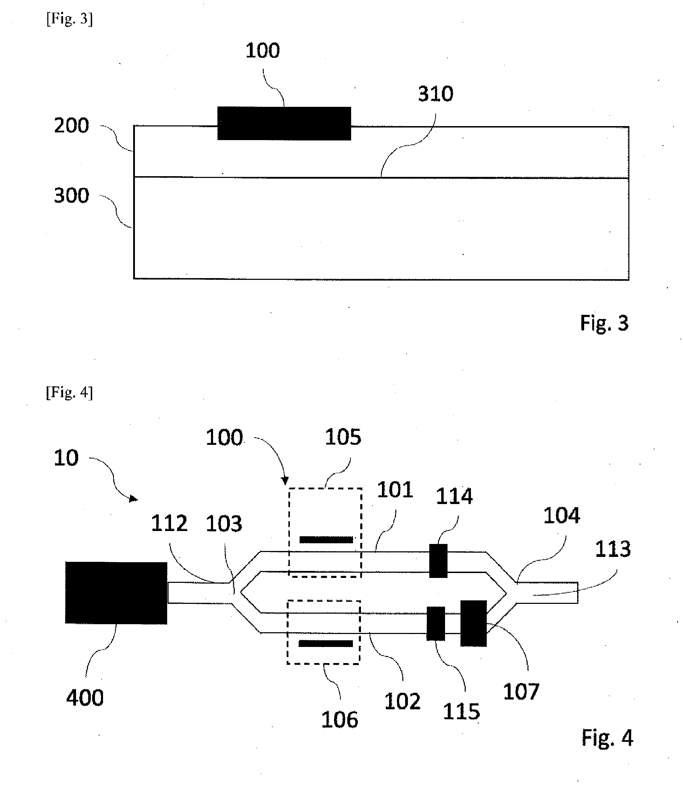

[Fig.3] La figure 3 est une représentation schématique d'un substrat support sur une face duquel repose la couche guide d'onde, et selon un plan de coupe perpendiculaire à la face avant ;

[Fig.4] La figure 4 est une représentation schématique d'un puce photonique selon une première variante d'un premier mode de réalisation de la présente invention, le puce photonique selon ce premier mode de réalisation comprend notamment un unique modulateur Mach Zehnder et deux amplificateurs optiques à matériaux semi-conducteurs ;

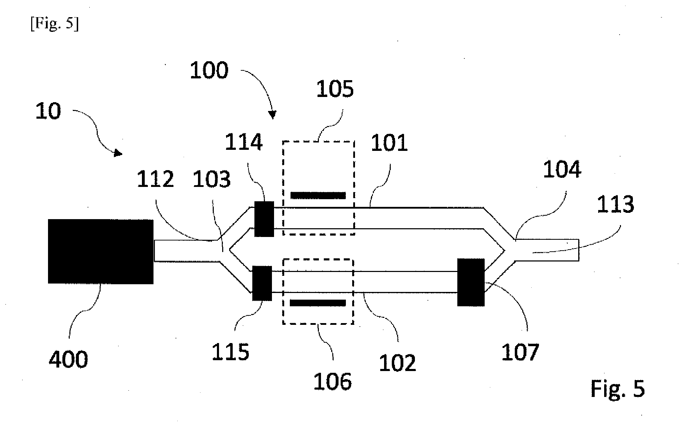

[Fig.5] La figure 5 est une représentation schématique d'un puce photonique selon une deuxième variante du premier mode de réalisation de la présente invention, le puce photonique selon ce premier mode de réalisation comprend notamment un unique modulateur Mach Zehnder et deux amplificateurs optiques à matériaux semi-conducteurs ;

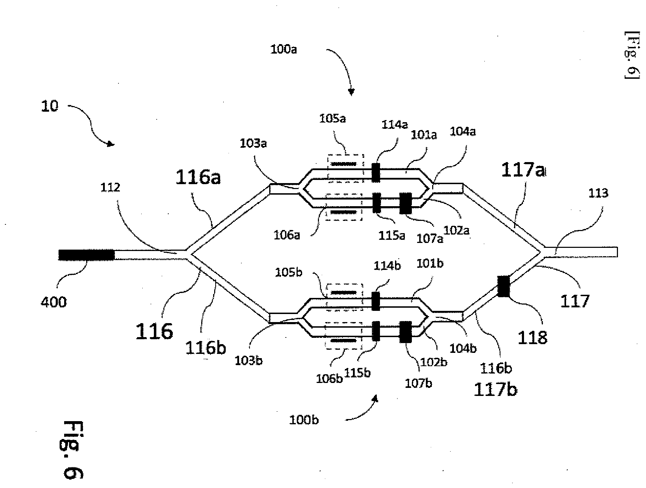

[Fig.6] La figure 6 est une représentation schématique d'un puce photonique selon une première variante d'un deuxième mode de réalisation de la présente invention, le puce photonique selon ce deuxième mode de réalisation comprend notamment deux modulateurs Mach Zehnder et quatre amplificateurs optiques à matériaux semi-conducteurs ;

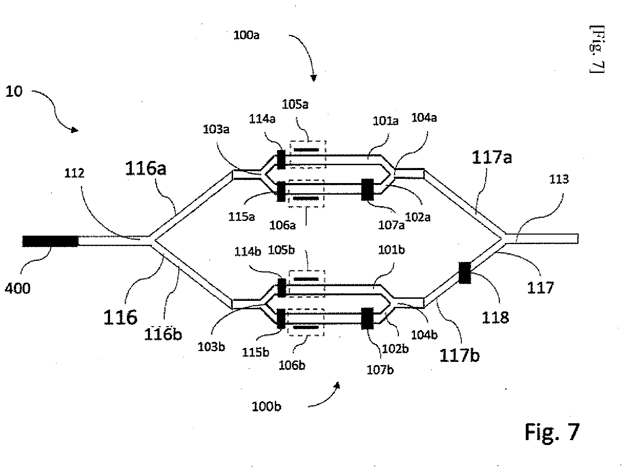

[Fig.7] La figure 7 est une représentation schématique d'un puce photonique selon une deuxième variante d'un deuxième mode de réalisation de la présente invention, le puce photonique selon ce deuxième mode de réalisation comprend notamment deux modulateurs Mach Zehnder et quatre amplificateurs optiques à matériaux semi-conducteurs ;

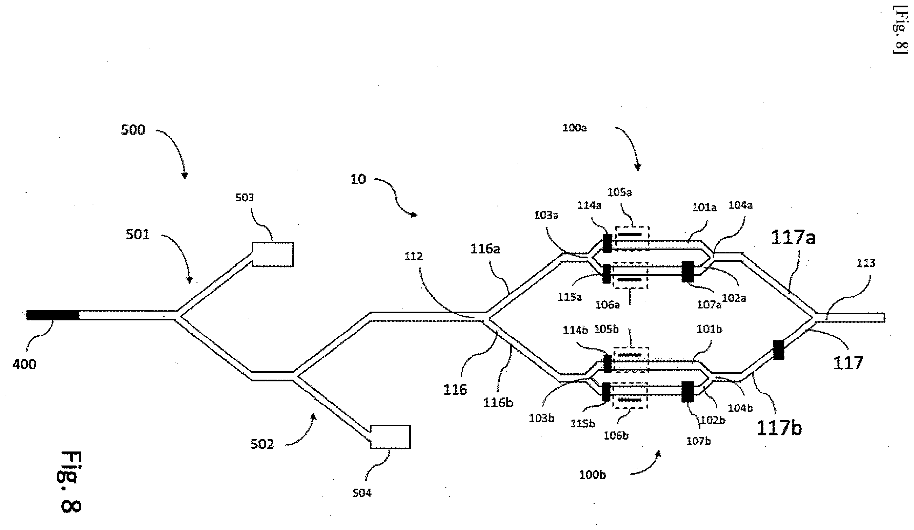

[Fig.8] La figure 8 représente la puce photonique de la figure 7 associée à un module intermédiaire ;

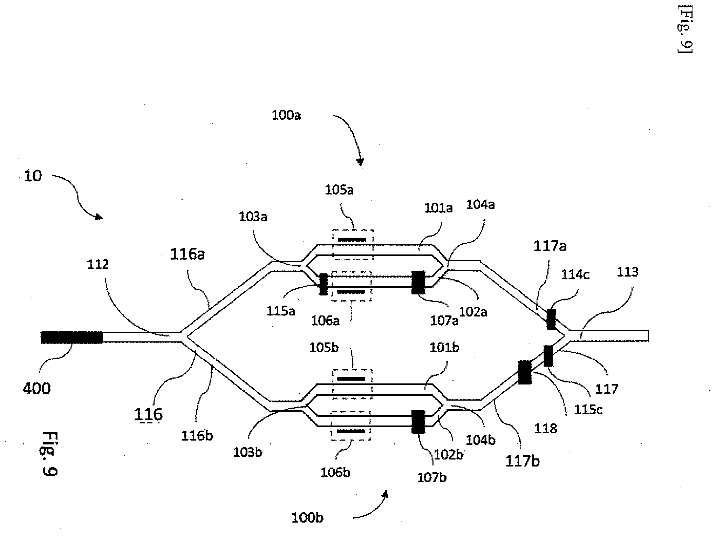

[Fig.9] La figure 9 est une représentation schématique d'un puce photonique selon un troisième mode de réalisation de la présente invention, le puce photonique selon ce troisième mode de réalisation comprend notamment deux modulateurs Mach Zehnder et deux amplificateurs optiques à matériaux semi-conducteurs.

## DESCRIPTION DETAILLEE DE L'INVENTION

La présente invention concerne une puce photonique, et plus particulièrement une puce photonique pourvue d'un ou deux modulateurs Mach Zehnder formés sur et/ou dans une couche, dite couche guide d'onde, reposant sur une face avant d'un substrat support.

Selon la présente invention, le ou les modulateurs Mach Zehnder sont disposés entre une entrée optique et une sortie optique, de sorte qu'un rayonnement lumineux injecté au niveau de l'entrée optique soit divisé en un premier rayonnement et un deuxième rayonnement destinés à être guidés par le ou les modulateurs Mach Zehnder, et soient ensuite recombinés au niveau de la sortie optique.

La puce photonique comprend au moins deux amplificateurs optiques à matériaux semi-conducteurs agencés pour amplifier séparément le premier rayonnement et le deuxième rayonnement avant leur recombinaison au niveau de la sortie optique.

La figure 2 est une représentation schématique d'un modulateur Mach Zehnder 100 susceptible d'être mis en œuvre dans le cadre de la présente invention.

Notamment, le modulateur Mach Zehnder 100 peut être formé sur ou dans une couche, dite couche guide d'onde 200 reposant sur une face avant 310 d'un substrat support 300 (figure 3).

Le substrat support 300 peut comprendre tout type de matériaux, et plus particulièrement un matériau semi-conducteur. Notamment, le matériau semi-conducteur peut comprendre du silicium, ou un semi-conducteur III-V. De manière alternative, le substrat support 300 peut comprendre un matériau piézoélectrique et notamment du niobate de lithium ($LiNbO_3$).

La couche guide d'onde 200 peut comprendre un matériau diélectrique, par exemple du dioxyde de silicium.

Selon les termes de la présente invention, un modulateur Mach Zehnder comprend deux branches de modulation dites, respectivement, première branche 101 et deuxième branche 102.

La première branche 101 et la deuxième branche 102 sont reliées, par une de leurs extrémités, par une entrée optique intermédiaire 103, et, par l'autre de leurs extrémités, par une sortie optique intermédiaire 104.

Plus particulièrement, la première branche 101 et la deuxième branche 102 comprennent chacune un guide d'onde dits, respectivement, premier guide d'onde 101a et deuxième guide d'onde 102a. La première branche 101 et la deuxième branche 102 comprennent chacune une section de modulation dites, respectivement, première section de modulation 105 et deuxième section de modulation 106.

La section de modulation d'une branche de modulation donnée est configurée pour moduler la phase d'un rayonnement lumineux susceptible d'être guidé par la branche de modulation considérée.

Une section de modulation d'une branche de modulation peut notamment comprendre une section du guide d'onde de ladite branche, dite guide d'onde de modulation, et une électrode destinée à imposer un potentiel électrique audit guide d'onde de modulation.

Une section de modulation est notamment configurée pour qu'un potentiel électrique imposé par l'électrode au guide d'onde de modulation modifie l'indice de réfraction du guide d'onde de modulation considéré. Cette modification d'indice permet d'imposer un déphasage à un rayonnement lumineux susceptible d'être guidé par la section de modulation considérée. A cet égard, le guide d'onde de modulation peut comprendre un guide en silicium dopé, et plus particulièrement un guide d'onde en silicium accommodant une jonction PN. Un tel guide d'onde présente un indice de réfraction susceptible d'être modulé en fonction d'un potentiel électrique qui lui est imposé. Le document [3] cité à la fin de la description en fournit un exemple que l'homme du métier pourra mettre en œuvre dans le cadre de la présente invention. L'invention n'est toutefois pas limitée à ces seuls aspects, et l'homme du métier pourra envisager d'autres solutions. Notamment, et à titre d'exemple, le premier guide d'onde de modulation 108 et le deuxième guide d'onde de modulation 110 peuvent comprendre un semi-conducteur III-V ou encore du $LiNbO_3$, par exemple reporté par collage sur le substrat.

Ainsi, le guide d'onde de modulation et l'électrode de la première section de modulation 105 dits, respectivement, premier guide de modulation 108 et première électrode 109, permettent d'imposer une modulation de phase, dit premier déphasage, à un rayonnement lumineux guidé par la première banche 101. Ce premier déphasage est notamment modulé par le potentiel électrique, dit premier potentiel, imposé par la première électrode 109.

De manière équivalente, le guide d'onde de modulation et l'électrode de la deuxième section de modulation 106 dits, respectivement, deuxième guide de modulation 110 et deuxième électrode 111, permettent d'imposer une modulation de phase, dit deuxième déphasage, à un rayonnement lumineux guidé par la deuxième banche 102. Ce deuxième déphasage est notamment modulé par le potentiel électrique, dit deuxième potentiel, imposé par la deuxième électrode 111.

Selon la présente invention, le premier potentiel et le deuxième potentiel peuvent être égaux à, respectivement, u(t)/2 et -u(t)/2. Dans ces conditions, le déphasage imposé par la première section de modulation 105 et par la deuxième section de modulation 106 sont égaux à, respectivement, Mu(t)/2 et -Mu(t)/2 (M est un facteur d'efficacité d'un modulateur).

La deuxième branche 102 peut également comprendre un module de déphasage 107 configuré pour imposer un déphasage fixe Φ à un rayonnement lumineux susceptible d'être guidé par ladite deuxième branche 102 venant s'ajouter au déphasage -Mu(t)/2.

Ainsi, un rayonnement lumineux, d'intensité Pin, injecté au niveau de l'entrée optique intermédiaire 103 est divisé en deux rayonnements destinés à être guidés, respectivement, par la première branche 101 et la deuxième branche 102. Le rayonnement guidé par la première branche 101 subit un déphasage égal à Mu(t)/2, tandis que le rayonnement guidé par la deuxième branche 102 subit un déphasage égal à -Mu(t)/2 + Φ. Ces deux rayonnements guidés par, respectivement, la première branche 101 et la deuxième branche 102, sont ensuite recombinés au niveau de la sortie optique intermédiaire 104 pour former un rayonnement de sortie d'intensité Pout.

Pour un déphasage fixe Φ égal à π/2, Pout suit la loi suivante :

$$Pout = Pin/2 + Pin/2 * \sin\big(M.u(t)\big)$$

Il est entendu, sans qu'il soit nécessaire de le préciser, qu'une branche modulation d'un modulateur Mach Zehnder selon les termes de la présente invention, forme un chemin optique dépourvu de ramification. En d'autres termes, un rayonnement lumineux injecté au niveau de l'entrée optique intermédiaire d'un modulateur Mach Zehnder ne subit qu'une unique division.

Le modulateur Mach Zehnder 100 décrit ci-avant est intégré dans une puce photonique 10 objet de la présente invention. Plus particulièrement, la puce photonique 10 selon la présente invention comprend un ou deux modulateurs Mach Zehnder 100 dont les branches de modulation sont disposées entre une entrée optique 112 et une sortie optique 113 de sorte qu'un rayonnement lumineux injecté au niveau de l'entrée optique soit divisé en un premier rayonnement et un deuxième rayonnement destinés à être guidés par le ou les modulateurs Mach Zehnder 100, et soient ensuite recombinés au niveau de la sortie optique.

La puce photonique 10 comprend au moins deux amplificateurs optiques à matériaux semi-conducteurs agencés pour amplifier séparément le premier rayonnement et le deuxième rayonnement avant leur recombinaison au niveau de la sortie optique.

La figure 4 est une représentation schématique d'une puce photonique 10 selon une première variante d'un premier mode de réalisation de la présente invention et mettant en œuvre un modulateur Mach Zehnder 100 tel que décrit avant.

En particulier, la puce photonique 10, selon ce premier mode de réalisation, comprend un unique modulateur Mach Zehnder 100 et pour lequel le déphasage fixe $\Phi$ est égal à $\pi/2$. Notamment, l'entrée optique 112 et la sortie optique 113 sont confondues, respectivement, avec l'entrée optique intermédiaire 103 et la sortie optique intermédiaire 104. Ainsi un rayonnement injecté, par exemple par une source laser 400, au niveau de l'entrée optique 112 est divisé en un premier rayonnement et un deuxième rayonnement. Le premier rayonnement est alors guidé dans la première branche 101 pour se voir imposer un déphasage égal à Mu(t)/2. De manière équivalente, le deuxième rayonnement est guidé dans la deuxième branche 102 et se voit imposer un déphasage égal à -Mu(t)/2 + $\pi/2$.

La puce photonique 10 comprend en outre deux amplificateurs optiques à matériaux semi-conducteurs dits, respectivement, premier amplificateur 114 et deuxième amplificateur 115 sensiblement identiques.

Le premier amplificateur 114 est disposé sur la première branche 101, tandis que le deuxième amplificateur 115 est disposé sur la deuxième branche 102. Le premier amplificateur 114 et le deuxième amplificateur 115 sont ainsi agencés pour amplifier selon un gain G, respectivement, le premier rayonnement et le deuxième rayonnement.

L'intégration d'un amplificateur optique à matériaux semi-conducteurs à un guide d'onde est décrite dans le document [1] cité à la fin de la description. Notamment, un tel amplificateur optique à matériaux semi-conducteurs peut comprendre un multi puit quantique formé de couches de InGaAsP. Plus particulièrement, cet amplificateur optique à matériaux semi-conducteurs peut former un guide d'onde hybride couplé avec le guide d'onde de la branche de modulation. Ce couplage peut faire intervenir une section de transition, et notamment un guide d'onde effilé (« tappered waveguide » selon la terminologie Anglo-Saxonne). Plus particulièrement, le couplage peut être adiabatique tel que décrit dans le document [4] cité à la fin de la description.

Par ailleurs, un amplificateur optique à matériaux semi-conducteurs peut être collé ou formé par épitaxie sur un guide d'onde, et notamment un guide d'onde de silicium.

Selon la première variante, l'amplificateur optique à matériaux semi-conducteurs d'une branche de modulation est disposé en aval de la section de modulation de la branche de modulation considérée. En d'autres termes, le premier amplificateur 114 est disposé entre la première section de modulation 105 et la sortie optique intermédiaire 103, tandis que le deuxième amplificateur 115 est disposé entre la deuxième section de modulation 106 et la sortie optique intermédiaire 104.

La figure 5 illustre une deuxième variante du premier mode de réalisation de la présente invention. Selon cette deuxième variante, l'amplificateur optique à matériaux semi-conducteurs d'une branche de modulation est disposé en amont de la section de modulation de la branche de modulation considérée. En d'autres termes, le premier amplificateur 114 est disposé entre l'entrée optique intermédiaire 103 et la première section de modulation 105, tandis que le deuxième amplificateur est disposé entre l'entrée optique intermédiaire 103 et la deuxième section de modulation 106.

L'agencement des amplificateurs optiques à matériaux semi-conducteurs selon ce premier mode de réalisation permet d'amplifier des rayonnements lumineux modulés en phase uniquement, et non pas en intensité tel que décrit dans le document [1] cité à la fin de la description. En d'autres termes, cet agencement permet de limiter, voire de prévenir, les effets de non linéarité des amplificateurs optiques à matériaux semi-conducteurs.

La présente invention concerne également un deuxième mode de réalisation. A cet égard, la figure 6 illustre une première variante du deuxième mode de réalisation.

La puce photonique selon ce deuxième mode de réalisation comprend deux modulateurs Mach Zehnder 100 dits, respectivement, modulateur I 100a et modulateur Q 100b identiques de sorte que la puce photonique 10 forme un modulateur IQ.

Le modulateur I 100a et le modulation Q 100b reprennent pour l'essentiel l'architecture du modulateur Mach Zehnder 100 de la première variante du premier mode de réalisation.

Notamment, la première branche 101a et la deuxième branche 102a du modulateur I 100a sont reliées, par une de leurs extrémités, par l'entrée optique intermédiaire dite entrée I 103a, et par l'autre de leurs extrémités, par la sortie optique intermédiaire, dite sortie I 104a. De manière équivalente, la première branche 101b et la deuxième branche 102b du modulateur Q 100b sont reliées, par une de leurs extrémités, par l'entrée optique intermédiaire dite entrée Q 103b, et par l'autre de leurs extrémités, par la sortie optique intermédiaire, dite sortie Q 104b.

La première branche 101a et la deuxième branche 102a du modulateur I comprennent également, respectivement, la première section de modulation 105a et deuxième section de modulation 106a.

De manière équivalente, la première branche 101b et la deuxième branche 102b du modulateur Q comprennent également, respectivement, la première section de modulation 105b et deuxième section de modulation 106b.

La deuxième branche 102a et la deuxième branche 102b comprennent chacune un module de déphasage, dits, respectivement, module I 107a et module Q 107b. Notamment, le module I 107a et le module Q 107b sont configurés pour imposer un déphasage $\Phi$ égal à $\pi$.

La puce photonique 10 comprend en outre quatre amplificateurs optiques à matériaux semi-conducteurs dits premier amplificateur I 114a, deuxième amplificateur I 115a, premier amplificateur Q 114b et deuxième amplificateur Q 115b. En particulier, le premier amplificateur I 114a, le deuxième amplificateur I 115a sont disposés respectivement sur la première branche 101a et sur la deuxième branche 102a du modulateur I 100a. De manière équivalente, le premier amplificateur Q 114b et le deuxième amplificateur Q 115b sont disposés respectivement sur la première branche 101b et sur la deuxième branche 102b du modulateur Q 100b.

Plus particulièrement, selon la première variante du deuxième mode de réalisation, l'amplificateur optique à matériaux semi-conducteurs d'une branche de modulation d'un modulateur Mach Zehnder est disposé entre la section de modulation de la branche de modulation considérée et la sortie optique intermédiaire dudit modulateur Mach Zehnder.

Ainsi, le premier amplificateur I 114a est disposé entre la première section de modulation 105a et la sortie I 104a.

Le deuxième amplificateur I 115a est disposé entre la deuxième section de modulation 106a et la sortie I 104a.

Le premier amplificateur Q 114b est disposé entre la première section de modulation 105b et la sortie Q 104b.

Le deuxième amplificateur Q 115b est disposé entre la deuxième section de modulation 106b et la sortie Q 104b.

La puce photonique 10 comprend un diviseur de rayonnement 116 et un combineur de rayonnement 117.

En particulier, le diviseur de rayonnement 116 comprend deux guides d'onde dits, respectivement, guide d'entrée I 116a et guide d'entrée Q 116b. Le guide d'entrée I 116a relie l'entrée optique 112 avec l'entrée I 103a, du modulateur I 110a. De manière équivalente, le guide d'entrée Q 116b relie l'entrée optique 112 avec l'entrée Q 103b, du modulateur I 110b.

Le combineur de rayonnement 117 comprenant deux guides d'onde dits, respectivement, guide de sortie I 117a et guide de sortie Q 117b. Le guide de sortie I 117a relie la sortie optique 113 avec la sortie I 104a. Le guide de sortie Q 117b relie la sortie optique 113 avec la sortie Q 104b, du modulateur Q 100b.

La puce photonique peut comprendre un autre module de déphasage 118 configuré pour imposer un autre déphasage $\Phi'$ fixe égal à $\pi/2$ à un rayonnement lumineux entre la sortie Q 104b et la sortie optique 113.

Ainsi, un rayonnement lumineux injecté au niveau de l'entrée optique 112, par exemple par le laser 400, est divisé en deux rayonnements dits premier rayonnement et deuxième rayonnement injectés au niveau de, respectivement, l'entrée I et l'entrée Q. Le premier rayonnement est modulé par le modulateur I, pour former un premier rayonnement modulé, tandis que le deuxième rayonnement est modulé par le modulateur Q pour former un deuxième rayonnement modulé.

Le combineur de rayonnement 117 combine ensuite le premier rayonnement modulé et le deuxième rayonnement modulé en un rayonnement de sortie.

L'agencement des amplificateurs optiques à matériaux semi-conducteurs selon cette première variante du deuxième mode de réalisation permet d'amplifier des rayonnements lumineux modulés en phase uniquement, et non pas en intensité tel que décrit dans le document [1] cité à la fin de la description. En d'autres termes, cet agencement permet de limiter, voire de prévenir, les effets de non linéarité des amplificateurs optiques à matériaux semi-conducteurs.

Le deuxième mode de réalisation comprend également une deuxième variante illustrée à la figure 7 qui diffère de la première variante en ce que l'amplificateur optique à matériaux semi-conducteurs d'une branche de modulation d'un modulateur Mach Zehnder est disposé entre la section de modulation de la branche de modulation considérée et l'entrée optique intermédiaire dudit modulateur Mach Zehnder.

Ainsi, le premier amplificateur I 114a est disposé entre l'entrée I 103a et la première section de modulation 105a.

Le deuxième amplificateur I 115a est disposé entre l'entrée I 103a et la deuxième section de modulation 106a.

Le premier amplificateur Q 114b est disposé entre l'entrée Q 103b et la première section de modulation 105b.

Le deuxième amplificateur Q 115b est disposé entre l'entrée Q 103b et la deuxième section de modulation 106b.

L'agencement relatif à cette deuxième variante est particulièrement avantageux dès lors le rayonnement lumineux susceptible d'être injectée au niveau de l'entrée optique 112 présente une intensité réduite.

Notamment, un module intermédiaire 500 (figure 8) peut venir s'interposer entre la source 400 et l'entrée optique 112. Notamment, le module intermédiaire 500 comprend un premier diviseur de rayonnement 501, un deuxième diviseur de rayonnement 502, un oscillateur local 503, et un modulateur TM 504.

Le premier diviseur de rayonnement 501 est configuré pour diviser un rayonnement lumineux, émis par le laser, en deux premiers rayonnement intermédiaires. L'un de ces deux rayonnements est injecté dans l'oscillateur local 503, tandis que le deuxième oscillateur reçoit l'autre de ces deux premiers rayonnements intermédiaire. Ce dernier est à son tour divisé par le deuxième diviseur de rayonnement 502 en deux deuxièmes rayonnements intermédiaires. L'un de ces deux deuxièmes rayonnements intermédiaires est injecté dans le modulateur TM 504, tandis que l'entrée optique 112 reçoit l'autre de ces deux deuxièmes rayonnements intermédiaires.

Selon cette configuration, les pertes dans les diviseurs de rayonnement sont importantes. La mise en œuvre des quatre amplificateurs optiques à matériaux semi-conducteurs est donc particulièrement avantageuse.

L'agencement des amplificateurs optiques à matériaux semi-conducteurs selon cette deuxième variante du deuxième mode de réalisation permet d'amplifier des rayonnements lumineux modulés en phase uniquement, et non pas en intensité tel que décrit dans le document [1] cité à la fin de la description. En d'autres termes, cet agencement permet de limiter, voire de prévenir, les effets de non linéarité des amplificateurs optiques à matériaux semi-conducteurs.

La figure 9 représente la puce photonique 10 selon un troisième mode de réalisation de la présente invention.

Ce troisième mode de réalisation diffère de la première variante du deuxième mode de réalisation en ce que ladite puce ne comprend que deux amplificateurs optiques à matériaux semi-conducteur dits, respectivement, amplificateur I 114c et un amplificateur Q 115c, et portés, respectivement, par le guide de sortie I 117a et le guide de sortie Q 117b.

Ce troisième mode de réalisation est avantageux lorsque le modulateur I et le modulateur Q sont utilisés uniquement en modulateurs de phase pour produire une constellation dite 'phase shift keying'. Selon cette configuration, les rayonnements lumineux, au niveau de la sortie I 104a et de la sortie Q 104b, ne sont pas modulés en intensité. Chacun des deux amplificateurs optiques à matériaux semi-conducteur dits, respectivement, amplificateur I 114c et un amplificateur Q 115c, et portés, respectivement, par le guide de sortie I 117a et le guide de sortie Q 117b, n'amplifient qu'un rayonnement modulé en phase.

Bien sûr, l'invention n'est pas limitée aux modes de réalisation décrits et on peut y apporter des variantes de réalisation sans sortir du cadre de l'invention tel que défini par les revendications.

**REFERENCES**

[1] T. Hiraki et al., "Membrane InGaAsP Mach-Zehnder Modulator Integrated With Optical Amplifier on Si Platform" J. Lightwave Technol. 38, 3030-3036 (2020);
[2] R. Bonk et al., "Linear semiconductor optical amplifiers for amplification of advanced modulation formats" Opt. Express 20, 9657-9672 (2012);
[3] Reed, G et al., "Silicon optical modulators" Nature Photon 4, 518-526 (2010);
[4] S. Menezo et al., "Back-Side-On-BOX heterogeneous laser integration for fully integrated photonic circuits on silicon" 45th European Conference on Optical Communication (ECOC 2019), 2019, pp. 1-3.

**Revendications**

**1.** Puce photonique (10) comprenant :

- un substrat support (300) pourvu d'une face avant (310) ;
- une couche guide d'onde (200) reposant sur la face avant ;
- deux uniques modulateurs Mach Zehnder (100a, 100b) dits, respectivement, modulateur I (100a) et modulateur Q (100b) de sorte que la puce photonique forme un modulateur IQ, les deux modulateurs Mach Zehnder étant formés sur et/ou dans la couche guide d'onde, comprennent chacun deux branches de modulation, dites première branche (101a, 101b) et deuxième branche (102a, 102b) disposées entre entrée optique (112) et une sortie optique (113) de sorte qu'un rayonnement lumineux injecté au niveau de l'entrée optique (112) soit divisé en un premier rayonnement et un deuxième rayonnement destinés à être modulés par, respectivement, le modulateur I (110a) et le modulateur Q (100b) et soient ensuite recombinés au niveau de la sortie optique (113), chacune des deux branches de modulation d'un modulateur Mach-Zehnder comprend une section de modulation (105a, 105b, 106a, 106b) formée par un guide d'onde, dit guide d'onde de modulation, et un élément de modulation, l'élément de modulation étant configuré pour moduler la phase d'un rayonnement susceptible d'être guidé par le guide d'onde de modulation, la deuxième branche (102a, 102b) comprenant également un module de déphasage (107a, 107b) configuré pour imposer un déphasage fixe à un rayonnement lumineux susceptible d'être guidé par ladite deuxième branche (102a, 102b), la première branche (101a) et la deuxième branche (102a) du modulateur I (100a) étant reliées, par une de leurs extrémités, par une entrée optique intermédiaire dite entrée I (103a), et, par l'autre de leurs extrémités, par une sortie optique intermédiaire dite sortie I (104a), la première branche (101b) et la deuxième branche (102b) du modulateur Q (100b) étant reliées, par une de leurs extrémités, par une autre entrée optique intermédiaire dite entrée Q (103b), et, par l'autre de leurs extrémités, par une autre sortie optique intermédiaire dite sortie Q (104b) ;
la puce photonique comprend également un diviseur de rayonnement (116) et un combineur de rayonnement (117), le diviseur de rayonnement comprenant deux guides d'onde dits, respectivement, guide d'entrée I (116a) et guide d'entrée Q (116b), le guide d'entrée I et le guide d'entrée Q reliant l'entrée optique (112) avec, respectivement, l'entrée I et l'entrée Q, de sorte que le premier rayonnement et le deuxième rayonnement soient injectés au niveau de, respectivement, l'entrée I et l'entrée Q, le combineur de rayonnement comprenant deux guides d'onde dits, respectivement, guide de sortie I et guide de sortie Q, le guide de sortie I (117a) et le guide de sortie Q (117b) reliant une sortie optique (113) avec, respectivement, la sortie I et la sortie Q ;

**caractérisé en ce que**

la puce photonique comprend deux uniques amplificateurs optiques à matériaux semi-conducteurs (114c, 115c) dits, respectivement, amplificateur I et amplificateur Q portés, respectivement, par le guide de sortie I et le guide de sortie Q.

2. Puce photonique selon la revendication 1, dans laquelle ladite puce photonique comprend en outre un autre module de déphasage configuré pour imposer un autre déphasage fixe à un rayonnement lumineux entre la sortie Q et la sortie optique (113).

3. Puce photonique selon la revendication 1 ou 2, dans laquelle le guide d'onde de modulation comprend du silicium, avantageusement du silicium dopé, encore plus avantageusement une jonction PN le long du guide d'onde en Silicium.

4. Puce photonique selon la revendication 3, dans laquelle les au moins deux amplificateurs optiques à matériaux semi-conducteurs comprend un guide d'onde fait de matériaux semi-conducteurs III-V.

5. Puce photonique selon l'une des revendications 1 à 4, dans laquelle ladite puce photonique comprend en outre un module intermédiaire (500) s'interposant entre une source (400) de rayonnement lumineux et l'entrée optique (112), le module intermédiaire (500) comprend un premier diviseur de rayonnement (501), une deuxième diviseur de rayonnement (502), un oscillateur local (503) et un modulateur TM (504).

6. Puce photonique selon la revendication 5, dans laquelle le premier diviseur de rayonnement est configuré pour diviser un rayonnement lumineux, émis par la source (400), en deux premiers rayonnement intermédiaires, l'un de ces deux rayonnements étant injecté dans l'oscillateur local 503 tandis que le deuxième diviseur de rayonnement reçoit l'autre de ces deux premiers rayonnements intermédiaires.

7. Puce photonique selon la revendication 6, dans laquelle le deuxième diviseur de rayonnement est configuré pour diviser l'autre de ces deux premiers rayonnements intermédiaires en un rayonnement injecté dans le modulateur TM (504) et un rayonnement injecté au niveau de l'entrée optique 112.

**Patentansprüche**

1. Photonischer Chip (10), umfassend:

- ein Trägersubstrat (300), das mit einer Vorderfläche (310) versehen ist;
- eine Wellenleiterschicht (200), die auf der Vorderfläche ruht;
- zwei einzigartige Mach-Zehnder-Modulatoren (100a, 100b), die als Modulator I (100a) beziehungsweise Modulator Q (100b) bezeichnet werden, sodass der photonische Chip einen IQ-Modulator ausbildet, wobei die zwei Mach-Zehnder-Modulatoren auf und/oder in der Wellenleiterschicht ausgebildet sind, jeweils zwei Modulationszweige umfassen, die als erster Zweig (101a, 101b) und zweiter Zweig (102a, 102b) bezeichnet werden, die zwischen einem optischen Eingang (112) und einem optischen Ausgang (113) angeordnet sind, sodass eine Lichtstrahlung, die an dem optischen Eingang (112) eingekoppelt wird, in eine erste Strahlung und eine zweite Strahlung geteilt wird, die dazu bestimmt sind, durch den Modulator I (110a) beziehungsweise den Modulator Q (100b) moduliert zu werden, und dann an dem optischen Ausgang (113) rekombiniert werden, wobei jeder der zwei Modulationszweige eines Mach-Zehnder-Modulators einen Modulationsabschnitt (105a, 105b, 106a, 106b), der durch einen Wellenleiter ausgebildet wird, der als Modulationswellenleiter bezeichnet wird, und ein Modulationselement umfasst, wobei das Modulationselement zum Modulieren der Phase einer Strahlung konfiguriert ist, die geeignet ist, um durch den Modulationswellenleiter geleitet zu werden, der zweite Zweig (102a, 102b) ebenfalls umfassend ein Phasenverschiebungsmodul (107a, 107b), das zum Herbeiführen einer festen Phasenverschiebung bei einer Lichtstrahlung konfiguriert ist, die geeignet ist, um durch den zweiten Zweig (102a, 102b) geleitet zu werden, wobei der erste Zweig (101a) und der zweite Zweig (102a) des Modulators I (100a) durch eines ihrer Enden durch einen optischen Zwischeneingang, der als Eingang I (103a) bezeichnet wird, und durch das andere ihrer Enden durch einen optischen Zwischenausgang verbunden sind, der als Ausgang I (104a) bezeichnet wird, wobei der erste Zweig (101b) und der zweite Zweig (102b) des Q-Modulators (100b) durch eines ihrer Enden durch einen anderen optischen Zwischeneingang, der als Q-Eingang (103b) bezeichnet wird, und durch das andere ihrer Enden durch einen anderen optischen Zwischenausgang verbunden sind, der als Q-Ausgang (104b), bezeichnet wird;

wobei der photonische Chip ebenfalls einen Strahlungsteiler (116) und einen Strahlungskombinierer (117) umfasst, der Strahlungsteiler umfassend zwei Wellenleiter, die als Eingangsleiter I (116a) beziehungsweise Eingangsleiter Q (116b) bezeichnet werden, wobei der Eingangsleiter I und der Eingangsleiter Q den optischen Eingang (112) mit dem Eingang I beziehungsweise dem Eingang Q verbinden, sodass die erste Strahlung und die zweite Strahlung an dem Eingang I beziehungsweise an dem Eingang Q eingekoppelt werden, der Strahlungskombinierer umfassend zwei Wellenleiter, die als Ausgangsleiter I beziehungsweise Ausgangsleiter Q bezeichnet werden, wobei der Ausgangsleiter I (117a) und der Ausgangsleiter Q (117b) einen optischen Ausgang (113) mit dem Ausgang I beziehungsweise dem Ausgang Q verbinden;

**dadurch gekennzeichnet, dass**

der photonische Chip zwei einzigartige optische Verstärker mit Halbleitermaterialien (114c, 115c) umfasst, die als Verstärker I beziehungsweise Verstärker Q bezeichnet werden und durch den Ausgangsleiter I beziehungsweise den Ausgangsleiter Q getragen werden.

2. Photonischer Chip nach Anspruch 1, wobei der photonische Chip ferner ein weiteres Phasenverschiebungsmodul umfasst, das zum Herbeiführen einer weiteren festen Phasenverschiebung bei einer Lichtstrahlung zwischen dem Q-Ausgang und dem optischen Ausgang (113) konfiguriert ist.

3. Photonischer Chip nach Anspruch 1 oder 2, wobei der Modulationswellenleiter Silizium, vorteilhafterweise dotiertes Silizium, noch vorteilhafterweise einen PN-Übergang entlang des Siliziumwellenleiters umfasst.

4. Photonischer Chip nach Anspruch 3, wobei die mindestens zwei optischen Verstärker aus Halbleitermaterialien einen Wellenleiter umfassen, der aus III-V-Halbleitermaterialien hergestellt ist.

5. Photonischer Chip nach einem der Ansprüche 1 bis 4, wobei der photonische Chip ferner ein Zwischenmodul (500) umfasst, das zwischen einer Quelle (400) von Lichtstrahlung und dem optischen Eingang (112) eingefügt ist, wobei das Zwischenmodul (500) einen ersten Strahlungsteiler (501), einen zweiten Strahlungsteiler (502), einen lokalen Oszillator (503) und einen TM-Modulator (504) umfasst.

6. Photonischer Chip nach Anspruch 5, wobei der erste Strahlungsteiler zum Teilen einer Lichtstrahlung, die durch die Quelle (400) emittiert wird, in zwei erste Zwischenstrahlungen konfiguriert ist, wobei eine dieser zwei Strahlungen in den lokalen Oszillator 503 eingekoppelt wird, während der zweite Strahlungsteiler die andere dieser zwei ersten Zwischenstrahlungen aufnimmt.

7. Photonischer Chip nach Anspruch 6, wobei der zweite Strahlungsteiler zum Teilen der anderen dieser zwei ersten Zwischenstrahlungen in eine Strahlung, die in den TM-Modulator (504) eingekoppelt wird, und eine Strahlung, die an dem optischen Eingang 112 eingekoppelt wird, konfiguriert ist.

**Claims**

1. Photonic chip (10) comprising:

   - a support substrate (300) provided with a front face (310);
   - a waveguide layer (200) resting on the front face;
   - two single Mach-Zehnder modulators (100a, 100b), referred to respectively as modulator I (100a) and modulator Q (100b), so that the photonic chip forms an IQ modulator, the two Mach-Zehnder modulators being formed on and/or in the waveguide layer, each comprising two modulation branches, referred to as first branch (101a, 101b) and second branch (102a, 102b), arranged between an optical input (112) and an optical output (113) so that a light ray injected at the optical input (112) is split into a first ray and a second ray, intended to be modulated by, respectively, the modulator I (110a) and the modulator Q (100b), and are then recombined at the optical output (113), each of the two modulation branches of a Mach-Zehnder modulator comprises a modulation portion (105a, 105b, 106a, 106b) formed by a waveguide, referred to as a modulation waveguide, and a modulation element, the modulation element being designed to modulate the phase of a ray capable of being guided by the modulation waveguide, the second branch (102a, 102b) also comprising a phase-shift module (107a, 107b) designed to impose a fixed phase shift onto a light ray capable of being guided by said second branch (102a, 102b), the first branch (101a) and the second branch (102a) of the modulator I (100a) being connected, at one of the ends thereof, by an intermediate optical input, referred to as input I (103a), and, at the other of the ends thereof, by an intermediate optical output, referred to as output I (104a), the first branch (101b) and the second branch (102b) of the modulator Q (100b) being connected, at one of the ends thereof, by another intermediate optical input, referred to as input Q (103b), and, at the other of the ends thereof, by another intermediate optical output, referred to as output Q (104b);

the photonic chip also comprises a ray splitter (116) and a ray combiner (117), the ray splitter comprising two waveguides, referred to respectively as input guide I (116a) and input guide Q (116b), the input guide I and the input guide Q connecting the optical input (112) with, respectively, the input I and the input Q, so that the first ray and the second ray are injected at, respectively, the input I and the input Q, the ray combiner comprising two waveguides, referred to respectively as output guide I and output guide Q, the output guide I (117a) and the output guide Q (117b) connecting an optical output (113) with, respectively, the output I and the output Q; **characterized in that**

the photonic chip comprises two single semiconductor optical amplifiers (114c, 115c), referred to respectively as amplifier I and amplifier Q, carried, respectively, by the output guide I and the output guide Q.

2. Photonic chip according to claim 1, wherein said photonic chip further comprises another phase shift module designed to impose another fixed phase shift onto a light ray between the output Q and the optical output (113).

3. Photonic chip according to either claim 1 or claim 2, wherein the modulation waveguide comprises silicon, advantageously doped silicon, even more advantageously a PN junction along the waveguide made of silicon.

4. Photonic chip according to claim 3, wherein the at least two semiconductor optical amplifiers comprise a waveguide made of III-V semiconductor materials.

5. Photonic chip according to any of claims 1 to 4, wherein said photonic chip further comprises an intermediate module (500) interposed between a light ray source (400) and the optical input (112), the intermediate module (500) comprises a first ray splitter (501), a second ray splitter (502), a local oscillator (503) and a TM modulator (504).

6. Photonic chip according to claim 5, wherein the first ray splitter is designed to split a light ray, emitted by the source (400), into two first intermediate rays, one of these two rays being injected into the local oscillator 503 while the second ray splitter receives the other of these two first intermediate rays.

7. Photonic chip according to claim 6, wherein the second ray splitter is designed to split the other of these two first intermediate rays into a ray injected into the TM modulator (504) and a ray injected at the optical input 112.

[Fig. 1]

Fig. 1

[Fig. 2]

Fig. 2

[Fig. 3]

100

310

200

300

Fig. 3

[Fig. 4]

10

100  105

112  103  101  114  104  113

400

106  102  115  107

Fig. 4

[Fig. 5]

Fig. 5

[Fig. 6]

Fig. 6

[Fig. 7]

Fig. 7

[Fig. 8]

Fig. 8

[Fig. 9]

EP 4 396 629 B1

Fig. 9

EP 4 396 629 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9344196 B

**Littérature non-brevet citée dans la description**

- **T. HIRAKI et al.** Membrane InGaAsP Mach-Zehnder Modulator Integrated With Optical Amplifier on Si Platform. *J. Lightwave Technol.*, 2020, vol. 38, 3030-3036
- **R. BONK et al.** Linear semiconductor optical amplifiers for amplification of advanced modulation formats. *Opt. Express*, 2012, vol. 20, 9657-9672
- **REED, G et al.** Silicon optical modulators. *Nature Photon*, 2010, vol. 4, 518-526
- **S. MENEZO et al.** Back-Side-On-BOX heterogeneous laser integration for fully integrated photonic circuits on silicon. *45th European Conference on Optical Communication (ECOC 2019)*, 2019, 1-3